# EUROPÄISCHE PATENTSCHRIFT

(11) **EP 1 754 897 B1**
(45) Veröffentlichungstag und Bekanntmachung des Hinweises auf die Patenterteilung: **16.01.2008**
(21) Anmeldenummer: 06014796.4
(22) Anmeldetag: 17.07.2006
(51) Int. Cl.: F16B 12/40, A01G 9/14

(54) **Lagerungsvorrichtung**
Storage device
Dispositif de stockage

(30) Priorität: 18.08.2005 DE 202005013047 U
(43) Veröffentlichungstag der Anmeldung: 21.02.2007
(73) Patentinhaber: Korte, Hermann, Dipl.-Ing., 26903 Surwold (DE)
(72) Erfinder: Korte, Hermann, Dipl.-Ing., 26903 Surwold (DE); Schomaker, Rudolf, 49751 Segel (DE); Trinczek, Reinhold, 21514 Büchen (DE)
(74) Vertreter: Philipp, Matthias

(56) Entgegenhaltungen:
- EP-A- 1 393 617
- WO-A-20/05026021
- DE-U1-7202005 013 04
- GB-A- 1 569 405
- GB-A- 2 190 282
- NL-A- 9 201 887

## Beschreibung

Die Erfindung betrifft eine Lagerungsvorrichtung mit einem rechteckigen Sockelelement, das einen im wesentlichen ebenen Boden und vier senkrecht dazu angeordnete Aufnahmehülsen mit einem freien Innenquerschnitt aufweist, in denen jeweils eine hohlprofilförmige Tragstange, deren Außenquerschnitt dem Innenquerschnitt der Aufnahmehülsen entspricht, zum Halten von Lagerungsplattformen lösbar aufgenommen ist.

Eine derartige Lagerungsvorrichtung, die sich insbesondere zum Lagern, Bewässern und Transportieren von Pflanzen eignet, ist beispielsweise aus der DE 20 213 719.8 bekannt. Derartige Lagerungsvorrichtungen beinhalten im wesentlichen drei unterschiedliche Komponenten, nämlich ein Sockelelement, vier Tragstangen sowie eine Anzahl von Lagerungsplattformen, die in jeweils vorzugebenden vertikalen Abständen an den Tragstangen gehalten sind.

Derartige Lagerungsvorrichtungen haben sich in der Praxis gut bewährt, beanspruchen allerdings bei Transport oder Lagerung im leeren, unbeladenen Zustand relativ viel Platz im Verhältnis zu ihrem Eigengewicht, so daß der Wunsch besteht, eine größere Anzahl von Lagerungsvorrichtungen platzsparend lagern oder transportieren zu können.

Die Aufgabe der vorliegenden Erfindung besteht darin, eine gattungsgemäße Lagerungsvorrichtung dahingehend zu verbessern, daß das vorstehend beschriebene Problem gelöst wird.

Die Lösung besteht gemäß der Erfindung darin, daß im Bereich eines unteren Endes mindestens einer Aufnahmehülse ein erstes Zentriermittel zum zentrierenden Zusammenwirken mit einem oberen Ende einer Aufnahmehülse eines weiteren Sockelelements ausgebildet ist, und daß ein zweites Zentriermittel zum Zusammenwirken des unteren Endes mindestens einer Aufnahmehülse mit einem oberen Ende einer Tragstange einer weiteren Lagerungsvorrichtung vorgesehen ist.

Es kann vorgesehen sein, daß das zweite Zentriermittel im Bereich des unteren Endes der Aufnahmehülse ausgebildet ist.

Die Zentriermittel haben dabei die Funktion, ein in horizontaler Richtung verschiebesicheres Zusammenwirken zwischen übereinander gestapelten Lagerungsvorrichtungen zu gewährleisten, so daß zwei oder mehr Lagerungsvorrichtungen beispielsweise mit einem Gabelstapler aufeinandergesetzt werden können, oder mehrere Sockelelemente übereinander gestapelt werden können, wobei ein in horizontaler Richtung verschiebungssicheres Zusammenwirken durch formschlüssiges Ineinandergreifen entsprechender Teile erreicht wird. Ein derartiges Zentriermittel im Sinne der Erfindung muß dabei nicht zwangsläufig eine maßliche Passung zweier ineinandergreifender Teile beinhalten, sondern es kann durchaus ein gewisses Spiel vorhanden sein, solange gewährleistet ist, daß zwei vertikal benachbarte Lagerungsvorrichtungen oder Sockelelemente nicht unbegrenzt horizontal gegeneinander verschoben werden können, ohne sie zuvor in vertikaler Richtung um ein vorgegebenes Mindestmaß voneinander abzuheben.

Bevorzugt ist vorgesehen, daß die Aufnahmehülsen quadratischen Innenquerschnitt aufweisen.

Die Tragstangen können L-, U- oder C-förmigen Querschnitt aufweisen.

In einer bevorzugten Ausführungsform sieht die Erfindung vor, daß das erste Zentriermittel durch einen ersten, an dem unteren Ende der Aufnahmehülse gehaltenen und von diesem vorstehenden Zentrieransatz gebildet ist, dessen Außenquerschnitt dem Innenquerschnitt der Aufnahmehülse entspricht.

In einer anderen Ausführungsform kann vorgesehen sein, daß das erste Zentriermittel durch eine an dem unteren Ende der Aufnahmehülse gehaltene und von diesem vorstehende Zentrierhülse gebildet ist, deren Innenquerschnitt einem Außenquerschnitt der Aufnahmehülse entspricht.

Es kann vorgesehen sein, daß das zweite Zentriermittel durch einen zweiten, an dem ersten Zentrieransatz gehaltenen und von diesem vorstehenden Zentrieransatz gebildet ist, dessen Außenquerschnitt einem Innenquerschnitt der Tragstangen entspricht.

In einer weiteren Ausführungsform kann vorgesehen sein, daß das zweite Zentriermittel durch einen an dem unteren Ende der Aufnahmehülse gehaltenen und von diesem vorstehenden Zentrieransatz gebildet ist, dessen Außenquerschnitt einem Innenquerschnitt der Tragstangen entspricht.

In weiterer Abwandlung kann vorgesehen sein, daß das zweite Zentriermittel durch einen an einem Ende einer jeden Tragstange gehaltenen und von diesem vorstehenden Zentrieransatz gebildet ist, dessen Außenquerschnitt einem Innenquerschnitt der Tragstangen entspricht.

In weiterer Abwandlung sieht die Erfindung vor, daß das zweite Zentriermittel durch einen unteren Endabschnitt der Aufnahmehülse und einen darin fixierten Anschlag gebildet ist, der einen Abstand zu einem unteren Ende der Aufnahmehülse aufweisen kann.

Ferner kann vorgesehen sein, daß zweite Zentriermittel durch eine an einem Ende einer Tragstange fixierte Zentrierhülse gebildet ist, deren Innenquerschnitt dem Außenquerschnitt des ersten Zentrieransatzes entspricht.

Zweckmäßigerweise sieht die Erfindung vor, daß die Zentrieransätze und/oder Anschläge durch Hohlprofilabschnitte gebildet sind.

Das Sockelelement kann wannenartig ausgebildet sein und eine umlaufend geschlossen verlaufende Seitenwand und mindestens einen Überlauf aufweisen.

Bevorzugt ist vorgesehen, daß das Sockelelement unterseitig mit Rollen versehen ist, beispielsweise mit zwei feststehenden und zwei Lenkrollen, oder mit vier Lenkrollen.

Die Aufnahmehülsen weisen jeweils bevorzugt mindestens einen in deren Längsrichtung verlaufenden und an ihrem oberen Ende offen endenden Ausschnitt auf.

Zweckmäßigerweise sind die Tragstangen mit beabstandeten Einhängeausnehmungen zum Einhängen von Lagerungsplattformen versehen.

Jede Lagerungsplattform weist bevorzugt vier Halteelemente zum Einsetzen in die Tragstangen auf.

Die Erfindung bezieht sich ferner auf ein Sockelelement für eine erfindungsgemäße Lagerungsvorrichtung, mit einem im wesentlichen ebenen Boden und vier senkrecht dazu angeordneten Aufnahmehülsen mit einem freien Innenquerschnitt, in denen jeweils eine hohlprofilförmige Tragstange, deren Außenquerschnitt dem freien Innenquerschnitt entspricht, zum Halten von Lagerungsplattformen lösbar aufnehmbar ist, die sich dadurch auszeichnet, daß im Bereich eines unteren Endes mindestens einer Aufnahmehülse ein erstes Zentriermittel zum zentrierenden Zusammenwirken mit einem oberen Ende einer Aufnahmehülse eines weiteren Sockelelements ausgebildet ist, und daß ein zweites Zentriermittel zum Zusammenwirken des unteren Endes mindestens einer Aufnahmehülse mit einem oberen Ende einer Tragstange einer weiteren Lagerungsvorrichtung vorgesehen ist.

Hierbei kann vorgesehen sein, daß das zweite Zentriermittel im Bereich des unteren Endes der Aufnahmehülse ausgebildet ist.

In einer bevorzugten Ausführungsform sieht die Erfindung vor, daß das erste Zentriermittel durch einen ersten, an dem unteren Ende der Aufnahmehülse gehaltenen und von diesem vorstehenden Zentrieransatz gebildet ist, dessen Außenquerschnitt dem Innenquerschnitt der Aufnahmehülse entspricht.

In einer alternativen Ausführungsform ist vorgesehen, daß das erste Zentriermittel durch eine an dem unteren Ende der Aufnahmehülse gehaltene und von diesem vorstehende Zentrierhülse gebildet ist, deren Innenquerschnitt einem Außenquerschnitt der Aufnahmehülse entspricht.

Es kann vorgesehen sein, daß das zweite Zentriermittel durch einen zweiten, an dem ersten Zentrieransatz gehaltenen und von diesem vorstehenden Zentrieransatz gebildet ist, dessen Außenquerschnitt einem Innenquerschnitt der Tragstangen entspricht.

Weiter kann vorgesehen sein, daß das zweite Zentriermittel durch einen an dem unteren Ende der Aufnahmehülse gehaltenen und von diesem vorstehenden Zentrieransatz gebildet ist, dessen Außenquerschnitt dem Innenquerschnitt der Tragstangen entspricht.

Weiter sieht die Erfindung vor, daß das zweite Zentriermittel durch einen unteren Endabschnitt der Aufnahmehülse und einen in dieser fixierten Anschlag gebildet ist, der einen Abstand zu dem unteren Ende der Aufnahmehülse aufweisen kann.

Zweckmäßigerweise ist vorgesehen, daß die Zentrieransätze und/oder Anschläge durch Hohlprofilabschnitte gebildet sind.

Das Sockelelement kann wannenartig ausgebildet sein und eine umlaufend geschlossene Seitenwand und mindestens einen Überlauf aufweisen.

Das Sockelelement ist bevorzugt unterseitig mit Rollen versehen, beispielsweise mit zwei feststehenden und zwei Lenkrollen, oder mit vier Lenkrollen.

Weiterhin ist es zweckmäßig, wenn die Aufnahmehülsen jeweils mindestens einen in deren Längsrichtung verlaufenden und an ihrem oberen Ende offen endenden Ausschnitt aufweisen.

Weitere Vorteile und Merkmale der Erfindung ergeben sich aus der nachfolgenden Beschreibung von unterschiedlichen Ausführungsformen, wobei auf eine Zeichnung Bezug genommen ist, in der
Fig. 1 eine schematische perspektivische Ansicht einer erfindungsgemäßen Lagerungsvorrichtung zeigt;
Fig. 2 eine perspektivische Ansicht einer Sockelplattform der Lagerungsvorrichtung nach Fig. 1 zeigt;
Fig. 3 eine Draufsicht auf einen Eckbereich der Lagerungsplattform nach Fig. 2 zeigt;
Fig. 4 eine perspektivische Ansicht des Eckbereichs nach Fig. 3 zeigt;
Fig. 5 eine vergrößerte teilweise Darstellung einer Tragstange der Lagerungsvorrichtung nach Fig. 1 zeigt;
Fig. 6 eine perspektivische Darstellung einer Lagerungsplattform der Lagerungsvorrichtung nach Fig. 1 zeigt;
Fig. 7 eine vergrößerte Darstellung eines Einhänge-Endabschnitts der Lagerungsplattform nach Fig. 6 zeigt;
Fig. 8 eine Schnittansicht eines Eckbereichs einer Sockelplattform nach Fig. 3 und 4 zeigt;
Fig. 9 eine Schnittansicht eines Eckbereichs einer Variante der Sockelplattform nach Fig. 2 zeigt;
Fig. 10 eine Schnittansicht eines Eckbereichs einer weiteren Variante einer Sockelplattform nach Fig. 2 zeigt;
Fig. 11 eine Schnittansicht eines Eckbereichs einer weiteren Variante einer Sockelplattform nach Fig. 2 zeigt; und
Fig. 12 eine Schnittansicht eines Eckbereichs einer weiteren Variante einer Sockelplattform nach Fig. 2 zeigt.

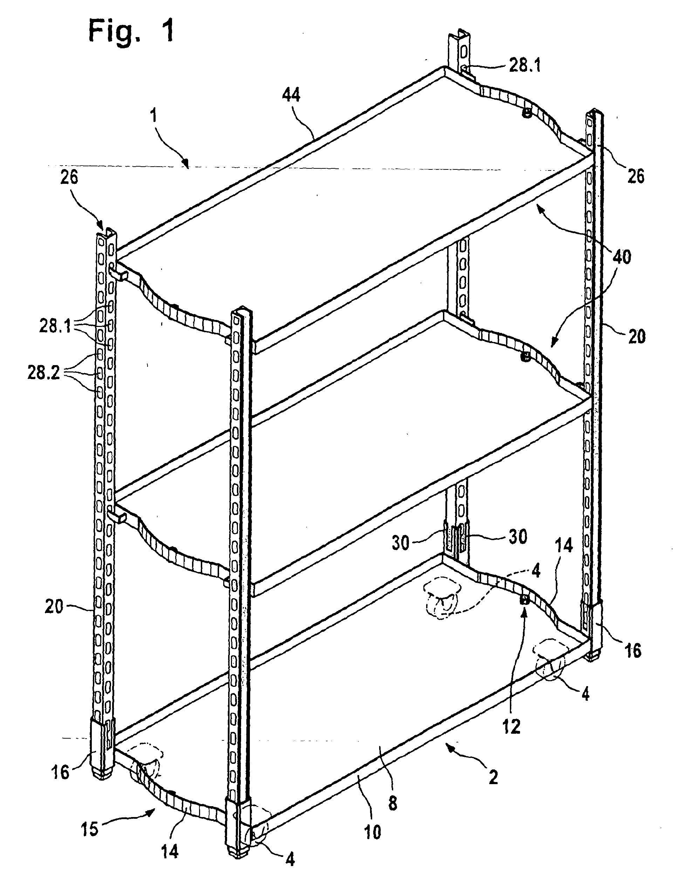

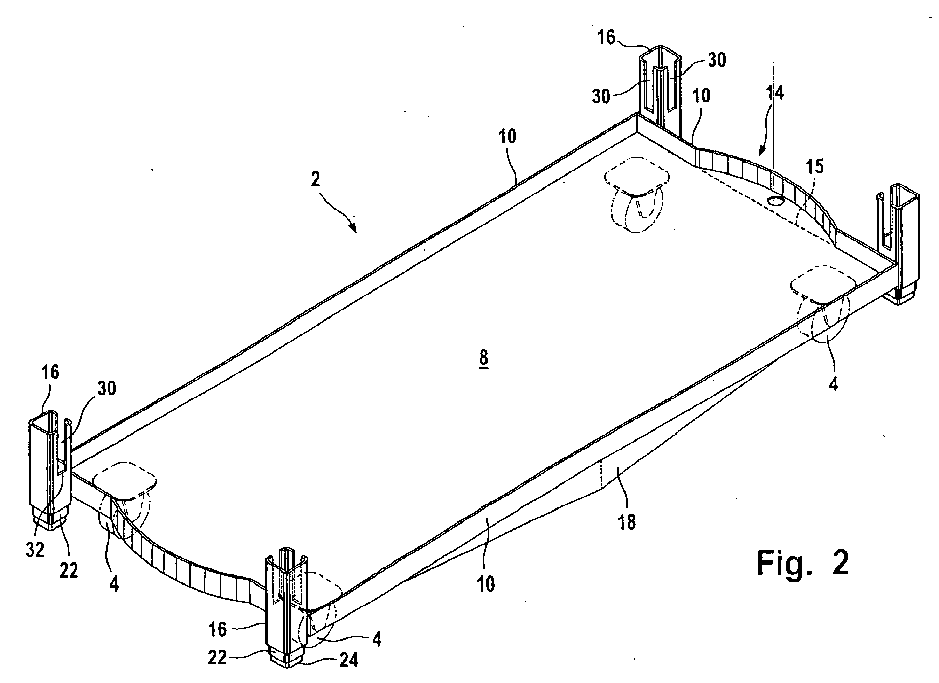

Fig. 1 zeigt in einer perspektivischen Ansicht eine erfindungsgemäße Lagerungsvorrichtung 1 mit einem im wesentlichen rechteckigen Sockelelement oder einer Sockelplattform 2, die unterseitig mit Rollen 4 versehen ist, beispielsweise mit zwei schwenkbaren und zwei feststehenden oder mit vier schwenkbaren Rollen, von denen mindestens eine mit einer Bremse versehen sein kann. Die Sockelplattform 2 weist einen im wesentlichen ebenen, horizontalen Boden 8 auf, der als Stellfläche für z.B. Pflanztöpfe dienen kann, wobei die Sockelplattform wannenförmig ausgebildet ist und eine umlaufend geschlossen verlaufende Seitenwand 10 mit einer Höhe von beispielsweise einigen Zentimetern aufweist. In zwei einander gegenüberliegenden Randbereichen der Schmalseiten ist jeweils ein Überlauf 12 angeordnet, der höhenverstellbar ist, um eine Höhe eines Flüssigkeitspegels auf dem Boden 8 einzustellen. Die Überläufe 12 sind jeweils im Bereich einer Erweiterung 14 des ansonsten rechteckförmigen Bodens 8 angeordnet, so daß eine rechteckförmige Stellfläche verbleibt, in der keine Überläufe angeordnet sind, wie mit der Schmalseite 15 in Fig. 2 angedeutet ist. Die Erweiterungen 14 können jede zweckmäßige Form haben, beispielsweise rechteckig, mehreckig, kreissektorförmig oder frei geformt.

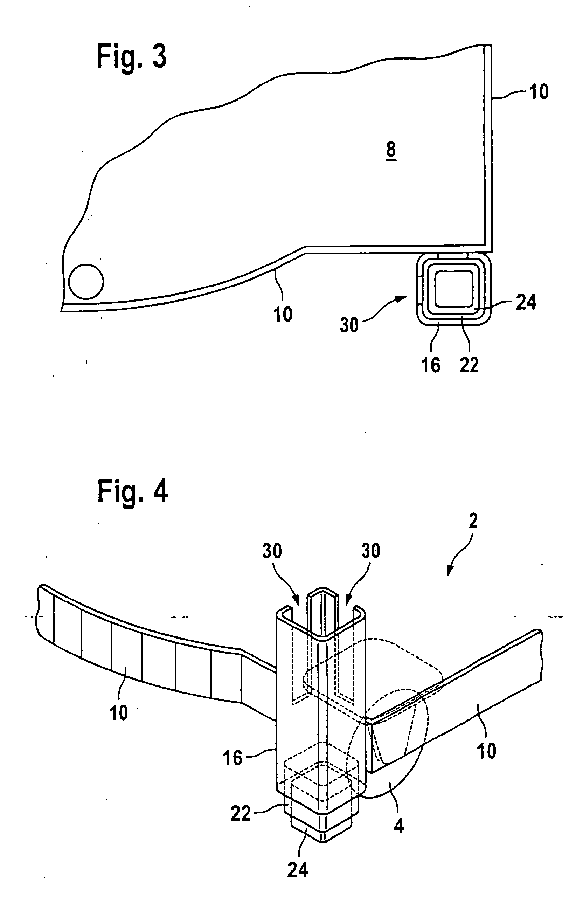

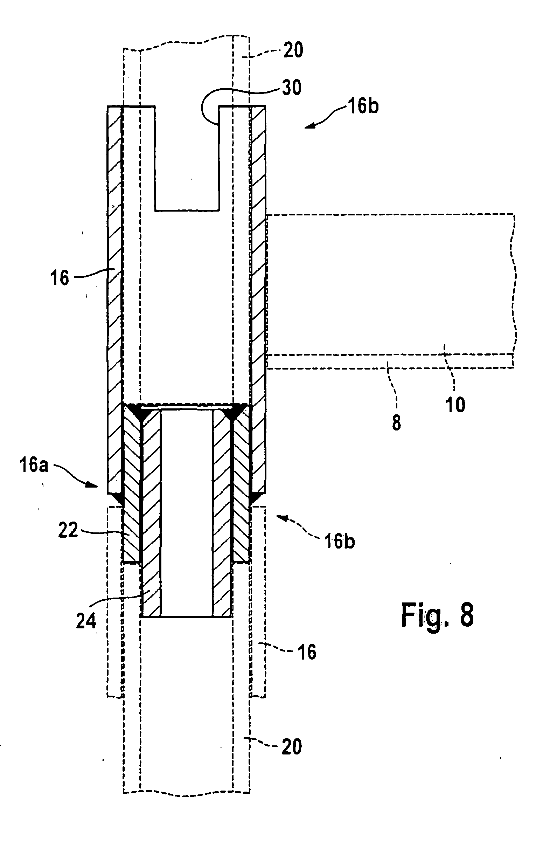

In den vier Eckbereichen der Sockelplattform 2 befindet sich jeweils eine Aufnahmehülse 16 quadratischen Querschnitts (Fig. 3, 4), deren Zweck darin besteht, eine Tragstange 20 lösbar aufzunehmen. Jede Aufnahmehülse 16 weist an ihrem unteren Ende einen Anschlag 22 auf, bei dem es sich in diesem Fall um eine Vierkanthülse kleineren Querschnitts handelt. Höhe und Anordnung des Anschlags 22 legen die Einstecktiefe der Tragstange 20 in die Aufnahmehülse 16 fest. Die Anschläge 22 können in einer ersten Ausführungsform nach Fig. 1 bis 4 und 8 nach unten aus den Aufnahmehülsen 16 vorstehen und ermöglichen ein zentriertes Aufeinanderstapeln mehrerer Sockelplattformen 2 übereinander, wie noch im einzelnen unter Bezugnahme auf Fig. 8 erläutert wird. An den Anschlag 22, der auch als ein erstes Zentriermittel wirkt, schließt sich ein zweites Zentrierelement 24 als zweites Zentriermittel an, dessen Außenquerschnitt dem Innenquerschnitt der hohlprofilförmigen Tragstangen 20 entspricht, wie ebenfalls weiter unten noch erläutert werden wird.

Jede Aufnahmehülse 16 ist in ihrem oberen Endbereich in zwei benachbarten Endabschnitten jeweils mit einem senkrecht verlaufenden Ausschnitt 30 versehen, der nach oben hin offen endet.

Der Boden 8 der Sockelplattform 2 ist an seinen Längsseiten unterhalb der Seitenwand 10 mit einer Verstärkung 18 versehen, um die Belastungsfähigkeit zu vergrößern.

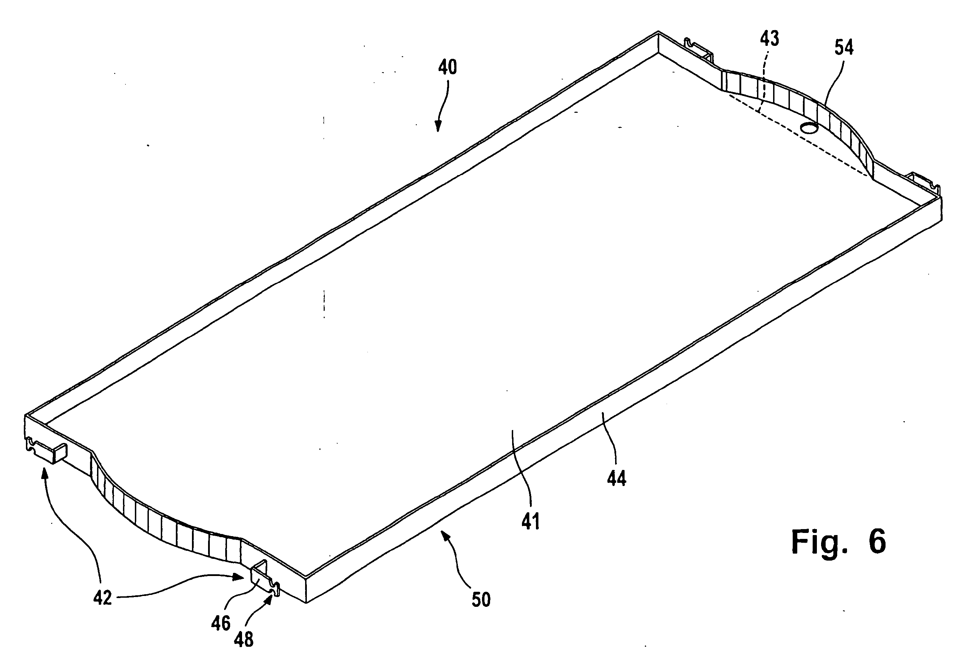

An den vier Tragstangen 20 sind eine Reihe von Lagerungsplattformen 40 lösbar gehalten, von denen eine in Fig. 6 mehr im einzelnen dargestellt ist. Die Lagerungsplattform 40 weist einen im wesentlichen ebenen Boden 41 und eine diesen wannenartig umschließende Seitenwand 44 auf. Im Bereich von Schmalseiten 43 weist die Lagerungsplattform jeweils eine Erweiterung 54 auf, die ebenso wie bei der Sockelplattform der Aufnahme eines nicht dargestellten Überlaufs dient (dargestellt ist nur dessen Aufnahmeöffnung in dem Boden 41), so daß eine rechteckförmige Stellfläche ohne Überläufe frei verfügbar bleibt, wie durch die Schmalseiten 43 angedeutet ist. Die Erweiterung 54 ist in diesem Beispiel kreissektorförmig, kann allerdings jede beliebige Form aufweisen.

Jede Lagerungsplattform 40 ist mit vier hakenförmigen Halterungselementen 42 versehen, die dem Einsetzen in die Tragstangen 20 dienen. In diesem Beispiel sind die Halterungselemente 42 in den Eckbereichen im Bereich der Schmalseiten 43 der Lagerungsplattform angeordnet. Jedes Halterungselement 42 weist einen Einhänge-Endabschnitt 46 auf, der frei endet, in diesem Beispiel in Richtung auf die jeweils benachbarte Längsseite 50 der Lagerungsplattform. In einer anderen, hier nicht dargestellten Bauform endet der Einhänge-Endabschnitt parallel zu den Längsseiten 50.

Jeder Einhänge-Endabschnitt 46 ist mit zwei Ausnehmungen 48, 48a versehen, die ein formschlüssiges Einsetzen in eine Tragstange 20 ermöglichen. Fig. 7 zeigt einen Einhänge-Endabschnitt in vergrößerter Darstellung. Die Ausnehmung 48a ermöglicht ein Einhängen der Lagerungsplattform 40 in umgedrehter Orientierung (Boden 41 weist nach unten).

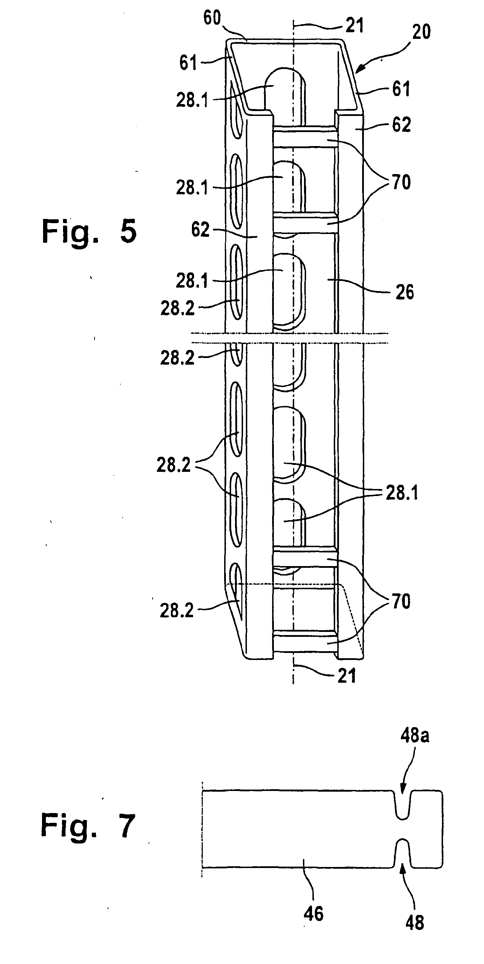

Fig. 5 zeigt eine Tragstange 20, die durch ein im Querschnitt C-förmiges Hohlprofil gebildet ist, welches einen Stegabschnitt 60, zwei davon abgehende und dazu senkrechte, zueinander parallele Schenkelabschnitte 61 und zwei wiederum von diesen abgehende, zueinander gerichtete Randabschnitte 62 aufweist. An den Enden der Tragstange 20 befinden sich jeweils zwei mit gegenseitigem Abstand angeordnete Stege 70, die jeweils zwischen den Randabschnitten 62 angeordnet sind.

In dem Stegabschnitt 60 sind über die gesamte Länge der Tragstange 20 erste Einhängeausnehmungen 28.1 mit gegenseitigem Abstand angeordnet, während auf der gegenüberliegenden Seite zwischen den Randabschnitten 62 ein durchgehender Längsschlitz 26 gebildet ist, der abgesehen von den Stegen 70 über die Länge der Tragstange durchgehend verläuft.

In einem Schenkelabschnitt 61 sind über die gesamte Länge der Tragstange 20 zweite Einhängeausnehmungen 28.2 mit gegenseitigem Abstand angeordnet, deren Größe, Form und gegenseitiger Abstand im wesentlichen den ersten Einhängeausnehmungen 28.1 entspricht. Aus Festigkeitsgründen sind jedoch die ersten und zweiten Einhängeausnehmungen in Längsrichtung der Tragstange gesehen gegeneinander versetzt, d.h. es ist jeweils in Längsrichtung gesehen eine erste Einhängeausnehmung 28.1 zwischen zwei zweiten Einhängeausnehmungen 28.2 angeordnet und umgekehrt, damit das Hohlprofil nicht übermäßig geschwächt wird.

In Bezug auf eine Längsachse 21 der Tragstange 20 sind die Einhängeausnehmungen 28.1, 28.2 und der Längsschlitz 26 somit um 90° bzw. 180° gegeneinander versetzt angeordnet.

Sofern zweckmäßig, können in allen drei Wandbereichen des Hohlprofils, in dem Stegabschnitt 60 und in beiden Schenkelabschnitten 61, Einhängeausnehmungen vorgesehen sein, die nach Bedarf gegeneinander in Längsrichtung versetzt sein können und in bezug auf die Längsachse um 90° oder 180° versetzt zueinander angeordnet sind.

Die Ausbildung von ersten und zweiten Einhängeausnehmungen 28.1, 28.2 in zwei um 90° zueinander versetzten Reihen, wie in Fig. 3 und 4 dargestellt, hat den Vorteil, daß zusätzlich zu den in Fig. 1 dargestellten Lagerungsplattformen 40 gemäß Fig. 6, deren Einhänge-Endabschnitte 46 quer zur Längsrichtung der Lagerungsplattform enden, auch solche Lagerungsplattformen in ein und dieselbe Lagerungsvorrichtung eingehängt werden können, deren Einhänge-Endabschnitte in Längsrichtung der Lagerungsplattformen enden.

Zusätzlich kann jede Tragstange etwa in der Mitte ihrer Länge mit einem weiteren Steg (nicht dargestellt) oder mit mehreren, über die Länge der Tragstange verteilt angeordneten Stegen (zweckmäßige Anzahl je nach Länge der Tragstange) nach Art der Stege 70 versehen sein.

Unter Bezugnahme auf Fig. 8 wird nachfolgend die erste Ausführungsform der Erfindung nach Fig. 1 bis 4 mehr im einzelnen erläutert. Fig. 8 zeigt eine vertikale Schnittansicht durch eine Aufnahmehülse 16 einer Sockelplattform 2, deren Boden 8 bzw. Seitenwand 10 in Fig. 8 lediglich angedeutet sind.

Die Aufnahmehülse 16, die in diesem Beispiel einen quadratischen Innen- und Außenquerschnitt aufweist, ist an ihrem unteren Ende 16a mit einem Anschlag 22 versehen, der auch als erstes Zentriermittel im Sinne der Erfindung wirkt und in diesem Beispiel als Hülsenelement mit quadratischem Innen - und Außenquerschnitt ausgebildet ist und mit dem unteren Ende 16a der Aufnahmehülse 16 verschweißt ist. Alternativ könnte unmittelbar anschließend an das untere Ende 16a der Aufnahmehülse 16 ein Zentrierelement mit einem Außenquerschnitt fixiert sein, der dem Innenquerschnitt der Aufnahmehülse 16 entspricht, und welches im übrigen massiv sein könnte oder einen beliebigen Innenquerschnitt haben könnte.

Ein zweites Zentriermittel 24 ist an dem Anschlag 22 befestigt, wobei es sich in diesem Beispiel um ein Hülsenelement quadratischen Innen- und Außenquerschnitts handelt und wobei der Außenquerschnitt des zweiten Zentriermittels 24 dem Innenquerschnitt der Tragstangen 20 und in diesem Beispiel auch dem Innenquerschnitt des ersten Zentriermittels 22 entspricht.

Das erste Zentriermittel 22 ermöglicht eine zentrierte, formschlüssige Stapelung mehrerer Sockelplattformen 2 unmittelbar übereinander, wobei jeweils ein erstes Zentriermittel 22 einer Sockelplattform 2 von oben in ein oberes Ende 16b einer Aufnahmehülse 16 einer darunter angeordneten Sockelplattform 2 greift, wie gestrichelt angedeutet ist. Dadurch sind die beiden oder mehreren Sockelplattformen 2 verschiebesicher aneinander gehalten und können als Stapel gelagert, transportiert oder in sonstiger Weise bewegt werden. Das zweite Zentriermittel 24 ermöglicht entsprechend eine Stapelung von Lagerungsvorrichtungen, wobei die ersten Zentriermittel in die Tragestangen 20 eingreifen, wie ebenfalls gestrichelt dargestellt ist.

Bei der Ausführungsform nach Fig. 8 kommt es somit lediglich auf die Außenquerschnitte oder die Außenkonturen der Zentriermittel 22, 24 an, die den Innenquerschnitten oder Innenkonturen einerseits der Aufnahmehülse 16 und andererseits der Tragstangen 20 entsprechen müssen bzw. geringfügig kleiner sein müssen als diese, damit ein leichtes Ineinandergreifen möglich ist.

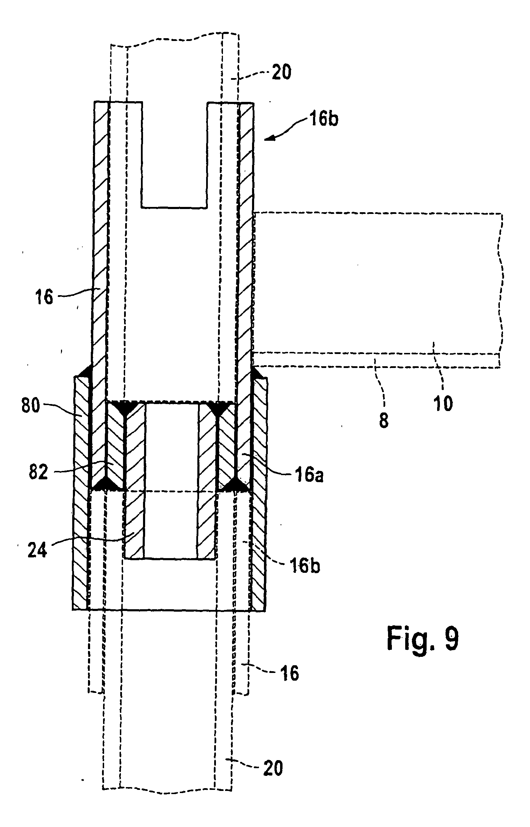

Fig. 9 zeigt eine zweite Ausführungsform der vorliegenden Erfindung, bei der ein erstes Zentriermittel durch eine Zentrierhülse 80 gebildet ist, die am unteren Ende 16a der Aufnahmehülse 16 befestigt ist, beispielsweise angeschweißt ist, und deren freier Innenquerschnitt dem Außenquerschnitt der Aufnahmehülse 16 entspricht. Ein zweites Zentriermittel 24, das dem der ersten Ausführungsform entspricht, ist ebenfalls an dem unteren Ende 16a befestigt und steht über dieses vor, ebenso wie die Zentrierhülse 80.

Bei einem Aufeinanderstapeln mehrer Sockelplattformen 2 übergreifen somit die Zentrierhülsen 80 als erste Zentriermittel die oberen Enden 16b der Aufnahmehülsen 16 einer jeweils unteren Sockelplattform, während bei einem Aufeinanderstapeln mehrerer Lagerungsvorrichtungen 1 die Zentriermittel 24 in die Tragstangen 20 einer unteren Lagerungsvorrichtung greifen, so wie dies in Fig. 9 gestrichelt angedeutet ist.

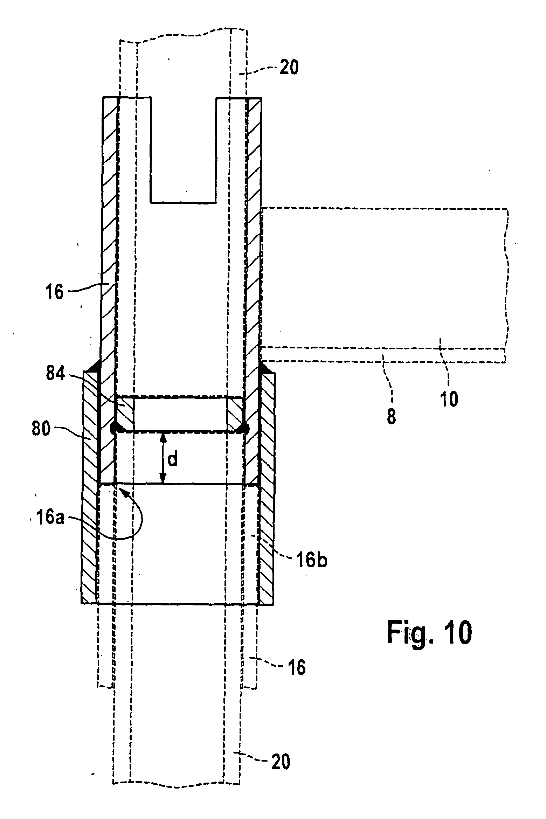

Fig. 10 zeigt eine dritte Ausführungsform der Erfindung, bei der das erste Zentriermittel wie in Fig. 9 durch eine Zentrierhülse 80 gebildet ist, während das zweite Zentriermittel durch einen unteren Endabschnitt der Aufnahmehülse 16 gebildet ist, in den ein Anschlag 84 mit Abstand d zu dem unteren Ende der Aufnahmehülse 16 fixiert ist, beispielsweise eingeschweißt ist.

Bei dieser Ausführungsform werden die oberen Enden der Tragstangen 20 somit innerhalb der Aufnahmehülsen 16 aufgenommen, soweit es der Anschlag 84 zuläßt, wenn eine Lagerungsvorrichtung auf eine andere gestellt wird, während die Zentrierhülsen 80 die oberen Enden 16b der Aufnahmehülsen 16 umschließen, wenn eine Sockelplattform auf eine andere gestellt wird, wie dies in Fig. 10 gestrichelt dargestellt ist.

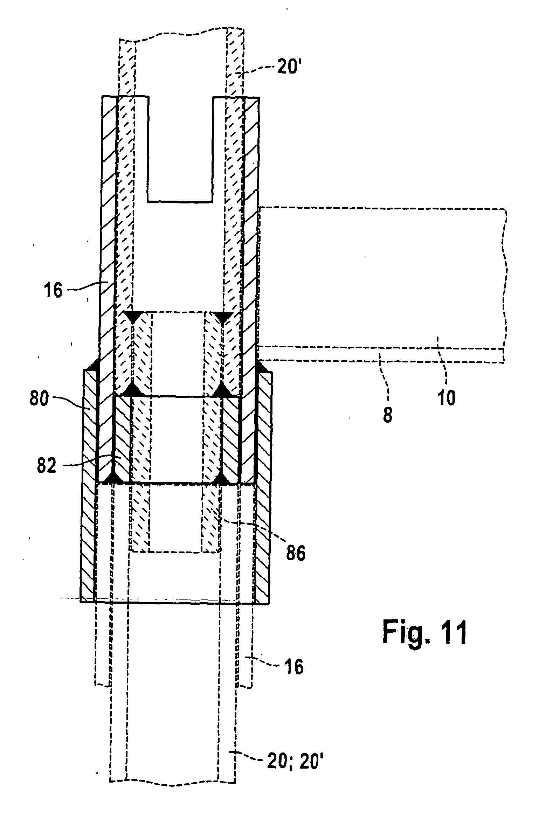

Fig. 11 zeigt ein weiteres Ausführungsbeispiel, bei dem das erste Zentriermittel wie zuvor durch eine Zentrierhülse 80 gebildet ist, während innerhalb der Aufnahmehülse 16 lediglich ein Anschlag 82 vorgesehen ist, der entweder mit dem unteren Ende der Aufnahmehülse 16 bündig abschließen kann, so wie in Fig. 9 und 11 dargestellt ist, oder wie in Fig. 10 dargestellt, zurückversetzt angeordnet sein könnte.

Das zweite Zentriermittel wird hier abweichend von den bisher erläuterten Ausführungsformen durch einen Zentrieransatz 86 gebildet, der mit einem Ende einer Tragstange 20' fest verbunden ist, beispielsweise mit dieser verschweißt ist. Der Außenquerschnitt des Zentrieransatzes 86 stimmt im wesentlichen mit dem Innenquerschnitt der Tragstange 20' überein, so daß ein formschlüssiges Einsetzen bei einem Aufeinanderstapeln zweier Lagerungsvorrichtungen übereinander gewährleistet ist, wie in Fig. 11 gestrichelt dargestellt ist (untere Tragstange 20 oder 20').

Bei einer Variante der in Fig. 11 dargestellten Ausführungsform könnten die Zentrieransätze 86 weggelassen werden, auch wenn die Anschläge 82 bündig mit den unteren Enden der Aufnahmehülsen 16 abschließen, da in einem solchen Fall die Zentrierwirkung der Zentrieransätze 86 größtenteils durch die Zentrierhülsen 80 übernommen wird und sich lediglich ein geringfügiges seitliches Spiel (quer zur Längsrichtung der Tragstangen 20') ergibt. Bei einer Sockelplattform mit einer Größe von mindesten 0,5 m x 1,0 m spielt ein derartiges Spiel von wenigen Millimetern (entsprechend der Wandstärke der Aufnahmehülse 16) praktisch keine Rolle.

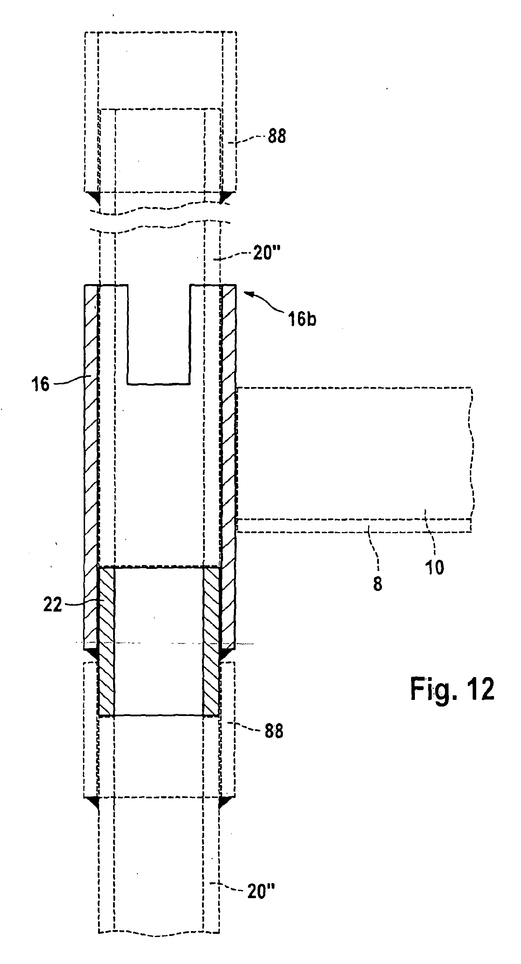

Fig. 12 zeigt noch eine weitere Ausführungsform der Erfindung, bei der das erste Zentriermittel 22 wie bei der ersten, in Fig. 8 dargestellten Ausführungsform ausgebildet ist. Das zweite Zentriermittel wird durch eine Zentrierhülse 88 gebildet, die an einem Ende einer Tragstange 20" fixiert ist, beispielsweise damit verschweißt ist. Der Innenquerschnitt der Zentrierhülse 88 entspricht dem Außenquerschnitt des Zentrierelements 22 und zweckmäßigerweise auch dem Außenquerschnitt der Tragstange 20", während der Außenquerschnitt des Zentrierelements 22 wie bei der ersten, in Fig. 8 dargestellten Ausführungsform dem Innenquerschnitt der Aufnahmehülse 16 entspricht. Bei den in Fig. 11 und 12 dargestellten Varianten besteht in vorteilhafter Weise die Möglichkeit, die Tragstangen 20', 20" teilbar zu gestalten, da zwei oder mehr Tragstangen 20', 20" aneinandergesteckt und dadurch eine mehrteilige Tragstange gebildet werden kann.

### Bezugszeichenliste

- 1: Lagerungsvorrichtung
- 2: Sockelplattform (Sockelelement)
- 4: Rolle
- 8: Boden
- 10: Seitenwand
- 12: Überlauf
- 14: Erweiterung
- 15: Schmalseite
- 16: Aufnahmehülse
- 16a: unteres Ende
- 16b: oberes Ende
- 20, 20', 20": Tragstange
- 21: Längsachse
- 22: Anschlag/erster Zentrieransatz (erstes Zentriermittel)
- 24: zweiter Zentrieransatz
- 26: Längsschlitz
- 28.1,28.2: Einhängeausnehmung
- 30: Ausschnitt
- 40: Lagerungsplattform
- 41: Boden
- 42: Halterungselement
- 43: Schmalseite
- 44: Seitenwand
- 46: Einhänge-Endabschnitt
- 48, 48a: Ausnehmung
- 50: Längsseite
- 54: Erweiterung
- 60: Stegabschnitt
- 61: Schenkelabschnitt
- 62: Randabschnitt
- 70: Steg
- 80: Zentrierhülse (erstes Zentriermittel)
- 82: Anschlag
- 84: Anschlag (zweites Zentriermittel)
- 86: Zentrieransatz (zweites Zentriermittel)
- 88: Zentrierhülse (zweites Zentriermittel)

## Patentansprüche

1. Lagerungsvorrichtung (1) mit einem rechteckigen Sockelelement (2), das einen im wesentlichen ebenen Boden (8) und vier senkrecht dazu angeordnete Aufnahmehülsen (16) mit einem freien Innenquerschnitt aufweist, in denen jeweils eine hohlprofilförmige Tragstange (20, 20', 20"), deren Außenquerschnitt dem Innenquerschnitt der Aufnahmehülsen (16) entspricht, zum Halten von Lagerungsplattformen (40) lösbar aufgenommen ist, **dadurch gekennzeichnet, daß** im Bereich eines unteren Endes (16a) mindestens einer Aufnahmehülse (16) ein erstes Zentriermittel (22, 80) zum zentrierenden Zusammenwirken mit einem oberen Ende (16b) einer Aufnahmehülse (16) eines weiteren Sockelelements (2) ausgebildet ist, und daß ein zweites Zentriermittel (14, 86, 88) zum Zusammenwirken des unteren Endes (16a) mindestens einer Aufnahmehülse (16) mit einem oberen Ende einer Tragstange (20, 20', 20") einer weiteren Lagerungsvorrichtung vorgesehen ist.

2. Lagerungsvorrichtung nach Anspruch 1, **dadurch gekennzeichnet, daß** das zweite Zentriermittel (24, 86) im Bereich des unteren Endes (16a) der Aufnahmehülse (16) ausgebildet ist.

3. Lagerungsvorrichtung nach Anspruch 1 oder 2, **dadurch gekennzeichnet, daß** die Aufnahmehülsen (16) quadratischen Innenquerschnitt aufweisen.

4. Lagerungsvorrichtung nach einem der vorangehenden Ansprüche, **dadurch gekennzeichnet, daß** das erste Zentriermittel durch einen ersten, an dem unteren Ende der Aufnahmehülse (16) gehaltenen und von diesem vorstehenden Zentrieransatz (22) gebildet ist, dessen Außenquerschnitt einem Innenquerschnitt der Aufnahmehülse entspricht.

5. Lagerungsvorrichtung nach einem der Ansprüche 1 bis 3, **dadurch gekennzeichnet, daß** das erste Zentriermittel durch eine an dem unteren Ende der Aufnahmehülse (16) gehaltene und von diesem vorstehende Zentrierhülse (80) gebildet ist, deren Innenquerschnitt einem Außenquerschnitt der Aufnahmehülse entspricht.

6. Lagerungsvorrichtung nach Anspruch 4, **dadurch gekennzeichnet, daß** das zweite Zentriermittel durch einen zweiten, an dem ersten Zentrieransatz (22) gehaltenen und von diesem vorstehenden Zentrieransatz (24) gebildet ist, dessen Außenquerschnitt einem Innenquerschnitt der Tragstangen (20) entspricht.

7. Lagerungsvorrichtung nach Anspruch 5, **dadurch gekennzeichnet, daß** das zweite Zentriermittel durch einen an dem unteren Ende der Aufnahmehülse (16) gehaltenen und von diesem vorstehenden Zentrieransatz (24) gebildet ist, dessen Außenquerschnitt einem Innenquerschnitt der Tragstangen (20) entspricht.

8. Lagerungsvorrichtung nach Anspruch 5, **dadurch gekennzeichnet, daß** das zweite Zentriermittel durch einen an einem Ende einer jeden Tragstange (20') gehaltenen und von diesem vorstehenden Zentrieransatz (86) gebildet ist, dessen Außenquerschnitt einem Innenquerschnitt der Tragstangen (20') entspricht.

9. Lagerungsvorrichtung nach Anspruch 5 oder 8, **dadurch gekennzeichnet, daß** das zweite Zentriermittel durch einen unteren Endabschnitt der Aufnahmehülse (16) und einen darin fixierten Anschlag (82, 84) gebildet ist.

10. Lagerungsvorrichtung nach Anspruch 9, **dadurch gekennzeichnet, daß** der Anschlag (84) einen Abstand (d) zu dem unteren Ende (16a) der Aufnahmehülse (16) aufweist.

11. Lagerungsvorrichtung nach Anspruch 4, **dadurch gekennzeichnet, daß** das zweite Zentriermittel durch eine an einem Ende einer Tragstange (20") fixierte Zentrierhülse (88) gebildet ist, deren Innenquerschnitt dem Außenquerschnitt des ersten Zentrieransatzes (22) entspricht.

12. Sockelelement (2) für eine Lagerungsvorrichtung (1) nach einem der vorangehenden Ansprüche, mit einem im wesentlichen ebenen Boden (8) und vier senkrecht dazu angeordneten Aufnahmehülsen (16) mit einem freien Innenquerschnitt, in denen jeweils eine hohlprofilförmige Tragstange (20, 20', 20"), deren Außenquerschnitt dem freien Innenquerschnitt entspricht, zum Halten von Lagerungsplattformen (40) lösbar aufnehmbar ist, **dadurch gekennzeichnet, daß** im Bereich eines unteren Endes (16a) mindestens einer Aufnahmehülse (16) ein erstes Zentriermittel (22, 80) zum zentrierenden Zusammenwirken mit einem oberen Ende (16b) einer Aufnahmehülse (16) eines weiteren Sockelelements (2) ausgebildet ist, und daß ein zweites Zentriermittel (24) zum Zusammenwirken des unteren Endes (16a) mindestens einer Aufnahmehülse (16) mit einem oberen Ende einer Tragstange (20, 20', 20") einer weiteren Lagerungsvorrichtung (1) vorgesehen ist.

13. Sockelelement nach Anspruch 12, **dadurch gekennzeichnet, daß** das zweite Zentriermittel (24, 86) im Bereich des unteren Endes (16a) der Aufnahmehülse (16) ausgebildet ist.

14. Sockelplattform nach Anspruch 12 oder 13, **dadurch gekennzeichnet, daß** das erste Zentriermittel durch einen ersten, an dem unteren Ende der Aufnahmehülse (16) gehaltenen und von diesem vorstehenden Zentrieransatz (22) gebildet ist, dessen Außenquerschnitt einem Innenquerschnitt der Aufnahmehülse entspricht.

15. Sockelelement nach Anspruch 12 oder 13, **dadurch gekennzeichnet, daß** das erste Zentriermittel durch eine an dem unteren Ende der Aufnahmehülse (16) gehaltene und von diesem vorstehende Zentrierhülse (80) gebildet ist, deren Innenquerschnitt einem Außenquerschnitt der Aufnahmehülse entspricht.

16. Sockelelement nach Anspruch 14, **dadurch gekennzeichnet, daß** das zweite Zentriermittel durch einen zweiten, an dem ersten Zentrieransatz gehaltenen und von diesem vorstehenden Zentrieransatz (24) gebildet ist, dessen Außenquerschnitt einem Innenquerschnitt der Tragstangen (20) entspricht.

17. Sockelelement nach Anspruch 15, **dadurch gekennzeichnet, daß** das zweite Zentriermittel durch einen an dem unteren Ende der Aufnahmehülse (16) gehaltenen und von diesem vorstehenden Zentrieransatz (24) gebildet ist, dessen Außenquerschnitt einem Innenquerschnitt der Tragstangen (20) entspricht.

18. Sockelelement nach Anspruch 15, **dadurch gekennzeichnet, daß** das zweite Zentriermittel durch einen unteren Endabschnitt der Aufnahmehülse (16) und einen darin fixierten Anschlag (82, 84) gebildet ist.

19. Sockelelement nach Anspruch 18, **dadurch gekennzeichnet, daß** der Anschlag (84) einen Abstand (d) zu dem unteren Ende (16a) der Aufnahmehülse (16) aufweist.

20. Sockelelement nach einem der Ansprüche 12 bis 19, **dadurch gekennzeichnet, daß** die Zentrieransätze (22, 24, 86) und/oder die Anschläge (82, 84) durch Hohlprofilabschnitte gebildet sind.

## Claims

1. Storage device (1) comprising a rectangular base element (2) which has an essentially flat bottom (8) and four locating sleeves (16) which are arranged perpendicularly thereto and have a free inner cross section and in which in each case a hollow-profile-shaped supporting bar (20, 20', 20") whose outer cross section corresponds to the inner cross section of the locating sleeves (16) is releasably accommodated for holding storage platforms (40), **characterized in that** a first centring means (22, 80) for the centring interaction with a top end (16b) of a locating sleeve (16) of a further base element (2) is formed in the region of a bottom end (16a) of at least one locating sleeve (16), and **in that** a second centring means (14, 86, 88) is provided for the interaction of the bottom end (16a) of at least one locating sleeve (16) with a top end of a supporting bar (20, 20', 20") of a further storage device.

2. Storage device according to Claim 1, **characterized in that** the second centring means (24, 86) is formed in the region of the bottom end (16a) of the locating sleeve (16).

3. Storage device according to Claim 1 or 2, **characterized in that** the locating sleeves (16) have a square inner cross section.

4. Storage device according to one of the preceding claims, **characterized in that** the first centring means is formed by a first centring extension (22) which is held on the bottom end of the locating sleeve (16) and projects from said end and whose outer cross section corresponds to the inner cross section of the locating sleeve.

5. Storage device according to one of Claims 1 to 3, **characterized in that** the first centring means is formed by a centring sleeve (80) which is held on the bottom end of the locating sleeve (16) and projects from said end and whose inner cross section corresponds to the outer cross section of the locating sleeve.

6. Storage device according to Claim 4, **characterized in that** the second centring means is formed by a second centring extension (24) which is held on the first centring extension (22) and projects from the latter and whose outer cross section corresponds to an inner cross section of the supporting bars (20).

7. Storage device according to Claim 5, **characterized in that** the second centring means is formed by a centring extension (24) which is held on the bottom end of the locating sleeve (16) and projects from said end and whose outer cross section corresponds to an inner cross section of the supporting bars (20).

8. Storage device according to Claim 5, **characterized in that** the second centring means is formed by a centring extension (86) which is held on an end of each supporting bar (20') and projects from said end and whose outer cross section corresponds to an inner cross section of the supporting bars (20').

9. Storage device according to Claim 5 or 8, **characterized in that** the second centring means is formed by a bottom end section of the locating sleeve (16) and a stop (82, 84) fixed therein.

10. Storage device according to Claim 9, **characterized in that** the stop (84) is at a distance (d) from the bottom end (16a) of the locating sleeve (16).

11. Storage device according to Claim 4, **characterized in that** the second centring means is formed by a centring sleeve (88) which is fixed to an end of a supporting bar (20") and whose inner cross section corresponds to the outer cross section of the first centring extension (22).

12. Base element (2) for a storage device (1) according to one of the preceding claims, comprising an essentially flat bottom (8) and four locating sleeves (16) which are arranged perpendicularly thereto and have a free inner cross section and in which in each case a hollow-profile-shaped supporting bar (20, 20', 20'') whose outer cross section corresponds to the free inner cross section can be releasably accommodated for holding storage platforms (40), **characterized in that** a first centring means (22, 80) for the centring interaction with a top end (16b) of a locating sleeve (16) of a further base element (2) is formed in the region of a bottom end (16a) of at least one locating sleeve (16), and **in that** a second centring means (24) is provided for the interaction of the bottom end (16a) of at least one locating sleeve (16) with a top end of a supporting bar (20, 20', 20") of a further storage device (1).

13. Base element according to Claim 12, **characterized in that** the second centring means (24, 86) is formed in the region of the bottom end (16a) of the locating sleeve (16).

14. Base platform according to Claim 12 or 13, **characterized in that** the first centring means is formed by a first centring extension (22) which is held on the bottom end of the locating sleeve (16) and projects from said end and whose outer cross section corresponds to the inner cross section of the locating sleeve.

15. Base element according to Claim 12 or 13, **characterized in that** the first centring means is formed by a centring sleeve (80) which is held on the bottom end of the locating sleeve (16) and projects from said end and whose inner cross section corresponds to the outer cross section of the locating sleeve.

16. Base element according to Claim 14, **characterized in that** the second centring means is formed by a second centring extension (24) which is held on the first centring extension and projects from the latter and whose outer cross section corresponds to an inner cross section of the supporting bars (20).

17. Base element according to Claim 15, **characterized in that** the second centring means is formed by a centring extension (24) which is held on the bottom end of the locating sleeve (16) and projects from said end and whose outer cross section corresponds to an inner cross section of the supporting bars (20).

18. Base element according to Claim 15, **characterized in that** the second centring means is formed by a bottom end section of the locating sleeve (16) and a stop (82, 84) fixed therein.

19. Base element according to Claim 18, **characterized in that** the stop (84) is at a distance (d) from the bottom end (16a) of the locating sleeve (16).

20. Base element according to one of Claims 12 to 19, **characterized in that** the centring extensions (22, 24, 86) and/or the stops (82, 84) are formed by hollow profile sections.

## Revendications

1. Dispositif de stockage (1) comprenant un élément de socle (2) rectangulaire, présentant un fond (8) sensiblement plan et quatre douilles de réception (16) disposées perpendiculairement à celui-ci, avec une section transversale intérieure libre, dans chacune desquelles une barre support (20, 20', 20") en forme de profilé creux, dont la section transversale extérieure correspond à la section transversale intérieure des douilles de réception (16) est logée, de façon désolidarisable, pour le maintien de plateformes de stockage (40), **caractérisé en ce que**, dans la zone d'une extrémité inférieure (16a), au moins d'une douille de réception (16), un premier moyen de centrage (22, 80,) pour la coopération centrante, avec une extrémité supérieure (16b) d'une douille de réception (16) d'un autre élément de socle, est réalisé, et **en ce qu'**un deuxième moyen de centrage (14,86, 88), pour coopération de l'extrémité inférieure (16a), au moins d'une douille de réception (16), avec une extrémité supérieure d'une barre support (20, 20', 20"), d'un autre dispositif de stockage, est prévu.

2. Dispositif de stockage selon la revendication 1, **caractérisé en ce que** le deuxième moyen de centrage (24, 86) est réalisé dans la zone de l'extrémité inférieure (16a) de la douille de réception (16).

3. Dispositif de stockage selon la revendication 1 ou 2, **caractérisé en ce que** les douilles de réception (16) présentent une section transversale carrée.

4. Dispositif de stockage selon l'une des revendications précédentes, **caractérisé en ce que** le premier moyen de centrage est formé par un premier appendice de centrage (22) maintenu sur l'extrémité inférieure de la douille de réception (16) et en saillie de celle-ci, dont la section transversale extérieure correspond à une section transversale intérieure de la douille de réception.

5. Dispositif de stockage selon l'une des revendications 1 à 3, **caractérisé en ce que** le premier moyen de centrage est formé par une douille de centrage (80) maintenue sur l'extrémité inférieure de la douille de réception (16) et en saillie de celle-ci, dont la section transversale intérieure correspond à une section transversale extérieure de la douille de réception.

6. Dispositif de stockage selon la revendication 4, **caractérisé en ce que** le deuxième moyen de centrage est formé par un deuxième appendice de centrage (24) maintenu sur le premier appendice de centrage (22) et en saillie de celui-ci, dont la section transversale extérieure correspond à une section transversale intérieure des barres support (20) .

7. Dispositif de stockage selon la revendication 5, **caractérisé en ce que** le deuxième moyen de centrage est formé par un appendice de centrage (24) maintenu sur l'extrémité inférieure de la douille de réception (16) et en saillie de celle-ci, dont la section transversale extérieure correspond à une section transversale intérieure des barres support (20).

8. Dispositif de stockage selon la revendication 5, **caractérisé en ce que** le deuxième moyen de centrage est formé par un appendice de centrage (86) maintenu sur une extrémité de chaque barre support (20') et en saillie de celle-ci, dont la section transversale extérieure correspond à une section transversale intérieure des barres support (20').

9. Dispositif de stockage selon la revendication 5 ou 8, **caractérisé en ce que** le deuxième moyen de centrage est formé par un tronçon d'extrémité inférieure de la douille de réception (16) et une butée (82, 84) y étant fixée.

10. Dispositif de stockage selon la revendication 9, **caractérisé en ce que** la butée (84) présente un espacement (d) par rapport à l'extrémité inférieure (16a) de la douille de réception (16).

11. Dispositif de stockage selon la revendication 4, **caractérisé en ce que** le deuxième moyen de centrage est formé par une douille de centrage (88) fixée à une extrémité d'une barre support (20"), dont la section transversale intérieure correspond à la section transversale extérieure du premier appendice de centrage (22).

12. Élément de socle (2) pour un dispositif de stockage (1) selon l'une des revendications précédentes, avec un fond (8) sensiblement plan et quatre douilles de réception (16), disposées perpendiculairement à celui-ci, ayant une section transversale intérieure libre, douille dans chacune desquelles une barre support (20, 20', 20") en forme de profilé creux, dont la section transversale extérieure correspond à la section transversale intérieure libre, peut être logée de façon désolidarisable pour le maintien de plateformes de stockage (40), **caractérisé en ce que**, dans la zone d'une extrémité inférieure (16a) d'au moins une douille de réception (16), est réalisé un premier moyen de centrage (22, 80) pour la coopération centrante avec une extrémité supérieure (16b) d'une douille de réception (16) d'un autre élément de socle (2), et **en ce qu'**un deuxième moyen de centrage (24) est prévu pour coopération de l'extrémité inférieure (16a) d'au moins une douille de réception (16) avec une extrémité supérieure d'une barre support (20, 20', 20") d'un autre dispositif de stockage (1).

13. Élément de socle selon la revendication 12, **caractérisé en ce que** le deuxième moyen de centrage (24, 86) est réalisé dans la zone de l'extrémité inférieure (16a) de la douille de réception (16).

14. Plate-forme de socle selon la revendication 12 ou 13, **caractérisée en ce que** le premier moyen de centrage est formé par un premier appendice de centrage (22), maintenu sur l'extrémité inférieure de la douille de réception (16) et en saillie de celle-ci, dont la section transversale extérieure correspond à une section transversale intérieure de la douille de réception.

15. Élément de socle selon la revendication 12 ou 13, **caractérisé en ce que** le premier moyen de centrage est formé par une douille de centrage (80), maintenue sur l'extrémité inférieure de la douille de réception (16) et en saillie de celle-ci, dont la section transversale intérieure correspond à la section transversale extérieure de la douille de réception.

16. Élément de socle selon la revendication 14, **caractérisé en ce que** le deuxième moyen de centrage est formé par un deuxième appendice de centrage (24), maintenu sur le premier appendice de centrage et en saillie de celui-ci, dont la section transversale extérieure correspond à une section transversale intérieure des barres support (20).

17. Élément de socle selon la revendication 15, **caractérisé en ce que** le deuxième moyen de centrage est formé par un appendice de centrage (24) maintenu sur l'extrémité inférieure de la douille de réception (16) et en saillie de celle-ci, dont la section transversale exténuer correspond à une section transversale intérieure des barres support (20).

18. Élément de socle selon la revendication 15, **caractérisé en ce que** le deuxième moyen de centrage est formé par un tronçon d'extrémité inférieure de la douille de réception (16) et une butée (82, 84) y étant fixée.

19. Élément de socle selon la revendication 18, **caractérisé en ce que** la butée (84) présente un espacement (d) par rapport à l'extrémité inférieure (16a) de la douille de réception (16).

20. Élément de socle selon l'une des revendications 12 à 19, **caractérisé en ce que** les appendices de centrage (22, 24, 26) et/ou les butées (82, 84) sont formés par des tronçons profilés creux.
